# FASCICULE DE BREVET EUROPEEN

(11) **EP 3 658 851 B1**
(45) Date de publication et mention de la délivrance du brevet: **06.10.2021**
(21) Numéro de dépôt: 18740244.1
(22) Date de dépôt: 20.07.2018
(51) Int. Cl.: G01C 11/00, B64G 1/10, G06Q 10/04

(54) **DISPOSITIF ET PROCÉDÉ DE SIMULATION DE L'ESTIMATION D'UN DÉLAI DE RÉALISATION D'IMAGES SATELLITAIRES DE LA TERRE**
VORRICHTUNG UND VERFAHREN ZUR SIMULATION DER SCHÄTZUNG EINER VERZÖGERUNG BEI DER ERZEUGUNG VON SATELLITENBILDERN DER ERDE
DEVICE AND METHOD FOR SIMULATING THE ESTIMATION OF A LAG IN PRODUCING SATELLITE IMAGES OF THE EARTH

(30) Priorité: 27.07.2017 FR 1757161
(43) Date de publication de la demande: 03.06.2020
(73) Titulaire: Airbus Defence and Space SAS, 31402 Toulouse Cedex 4 (FR); CENTRE NATIONAL D'ÉTUDES SPATIALES (C N E S), 75001 Paris (FR)
(72) Inventeur: AMSELEM, Cécilia, 31402 Toulouse Cedex 4 (FR); VILLEMÉJEANNE, Eric, 31402 Toulouse Cedex 4 (FR); ANGULO, Jean-Christophe, 31402 Toulouse Cedex 4 (FR)
(74) Mandataire: Plasseraud IP
(86) Numéro de dépôt international: PCT/EP2018/069707
(87) Numéro de publication internationale: WO 2019/020499

(56) Documents cités:
- WO-A1-2011/089477
- FR-A1- 3 011 322
- FR-A1- 3 039 728
- ROY WELCH ET AL: "ASTER as a Source for Topographic Data in the Late 1990's", IEEE TRANSACTIONS ON GEOSCIENCE AND REMOTE SENSING, IEEE SERVICE CENTER, PISCATAWAY, NJ, US, vol. 36, no. 4, 1 juillet 1998 (1998-07-01), pages 1282-1289, XP011021070, ISSN: 0196-2892

## Description

### Domaine technique

La présente invention concerne le domaine de la télédétection par satellite. Plus précisément, il concerne un dispositif et un procédé de simulation de l'estimation d'un délai de réalisation d'images satellitaires de la Terre par des techniques d'acquisition optique.

### Technique antérieure

L'espace circumterrestre contient nombre de satellites d'observation de la Terre permettant notamment de surveiller des paramètres du système Terre (océans, atmosphères, ressources naturelles, impacts des activités humaines, etc.), obtenir des cartographies ou fournir des informations permettant d'assurer la défense des États. Pour cela, ces systèmes se basent sur un ensemble de données d'imagerie satellitaire, c'est-à-dire un ensemble de mesures réalisées à l'aide d'instruments embarqués au niveau des satellites.

Du fait de la banalisation de l'observation de la Terre, les demandes d'imagerie satellitaire se multiplient de jour en jour. Or, certaines des ressources des satellites sont limitées, comme le nombre de prises de vues réalisables durant le survol d'une zone du globe ou encore les capacités de transmission des données vers le sol. Il est donc nécessaire de planifier à long terme l'utilisation de ces ressources tout en répondant aux demandes d'imagerie satellitaire.

Le délai nécessaire à la réalisation d'une demande d'imagerie satellitaire (en anglais, time-to-acquire) constitue l'un des éléments permettant d'élaborer un tel ordonnancement. Un tel délai correspond au temps écoulé entre l'activation d'une requête d'imagerie satellitaire et la fourniture des résultats d'imagerie au client. Dans le domaine de l'observation optique de la Terre, l'imagerie satellitaire est dépendante des conditions météorologiques. En effet, des nuages présents dans la zone d'acquisition peuvent masquer l'objet ou le territoire que l'on cherche à observer. Or, il est bien connu que les prévisions météorologiques à long terme présentent beaucoup d'incertitudes, ce qui rend difficile la détermination du délai de réalisation pour une demande d'imagerie satellitaire particulière. Ainsi, en pratique, il est courant d'estimer le délai de réalisation en se basant essentiellement sur l'expérience de l'opérateur du système d'observation de la Terre ainsi que de sa connaissance de la climatologie de la zone à acquérir.

Le caractère subjectif de cette estimation est difficilement compatible avec les exigences toujours plus grandes de fiabilité et de précision requises par les clients dans des systèmes de télédétection par satellite.

Le document "ROY WELCH ET AL: "ASTER as a Source for Topographie Data in the Late 1990's", IEEE TRANSACTIONS ON GEOSCIENCE AND REMOTE SENSING" décrit un procédé pour simuler l'estimation d'un délai de réalisation d'images satellitaires associées à au moins une zone prédéterminée de la Terre, par au moins un satellite d'observation comprenant un système d'imagerie optique, l'acquisition étant prévue pour être déclenchée à partir d'une date de commencement d'analyse et le procédé estimant le délai de réalisation en se basant sur des données statistiques historiques de nébulosité.

Le document WO 2011/089477 A1 décrit un procédé de planification d'une mission d'acquisition d'images par un satellite, dans lequel le plan d'acquisition est optimisé en prenant en compte plusieurs contraintes incluant la nébulosité et la date limite de livraison comme paramètres. Le procédé utilise des données historiques de nébulosité pour estimer quelles zones seraient les plus exploitables pour l'acquisition des images à une période donnée.

### Résumé de l'invention

La présente invention vise donc à pallier de tels inconvénients en procurant un procédé ainsi qu'un dispositif permettant d'estimer le délai nécessaire pour satisfaire une requête d'imagerie satellitaire associée à une zone prédéterminée de la Terre, par au moins un satellite d'observation de la Terre comprenant un système d'imagerie optique.

L'invention a pour objet un procédé pour simuler l'estimation d'un délai de réalisation d'images satellitaires associées à au moins une zone prédéterminée de la Terre, par au moins un satellite d'observation de la Terre comprenant un système d'imagerie optique, la zone prédéterminée étant préalablement divisée selon une grille à mailles, l'acquisition étant prévue pour être déclenchée à partir d'une date de commencement d'analyse. Le procédé est remarquable en ce qu'il comprend les étapes consistant à :
(a) sélectionner une pluralité de mailles de la grille, prévues pour être survolées par le satellite à une date courante d'itération, à partir des caractéristiques orbitales du satellite à la date courante d'itération, de sorte à obtenir des mailles candidates, la date courante d'itération correspondant à une date autour de la date de commencement d'analyse au cours d'une année antérieure à l'année associée à la date de commencement d'analyse,
(b) identifier parmi les mailles candidates, à partir d'un plan mission du satellite, celles pour lesquelles est prévue une planification d'acquisition d'au moins une image satellitaire, de sorte à obtenir des mailles planifiées,
(c) obtenir au moins une première valeur de nébulosité pour chacune des mailles planifiées, la première valeur de nébulosité correspondant à une observation et/ou une prévision météorologique, respectivement observée à la date courante d'itération ou réalisée pour la date courante d'itération,
(d) identifier parmi les mailles planifiées, celles pour lesquelles la première valeur de nébulosité associée est au-delà d'une valeur seuil de validation prédéterminée, de sorte à obtenir des mailles validées,
(e) répéter les étapes (a) à (d), une ou plusieurs fois jusqu'à ce que chacune des mailles de ladite grille soit comprises dans les mailles validées, en prenant en considération à chaque itération les mailles non identifiées comme validées et une période suivante de la date courante d'itération considérée dans l'itération précédente,
(f) déterminer le délai de réalisation d'images satellitaires à partir du nombre d'itérations réalisées à l'étape (e).

De préférence, l'étape (a) comprend en outre les étapes consistant à :
- obtenir au moins une deuxième valeur de nébulosité pour chacune des mailles candidates, la deuxième valeur de nébulosité correspondant à une observation météorologique et/ou une prévision météorologique, respectivement observée à la date courante d'itération ou réalisée pour la date courante d'itération, et,
- identifier parmi les mailles candidates, celles pour lesquelles la deuxième valeur de nébulosité associée est au-delà d'une valeur seuil de sélection prédéterminée différente de la valeur seuil de validation prédéterminée.

La valeur seuil de sélection prédéterminée et la valeur seuil de validation prédéterminée peuvent préférentiellement correspondre à une valeur seuil de pourcentage de ciel clair. De préférence, la valeur seuil de validation est plus grande que la valeur seuil de sélection.

De préférence, l'étape (f) comprend en outre l'étape consistant à déterminer au moins une grandeur statistique et/ou au moins une probabilité à postériori à partir d'une pluralité de délais de réalisation d'images satellitaires déterminés à l'étape (d).

L'invention vise aussi un produit programme d'ordinateur, qui, lorsqu'il est exécuté par un ordinateur, est agencé de façon à exécuter un procédé selon l'invention ; le programme informatique étant, en option, stocké sur un support lisible par ordinateur.

L'invention a également pour objectif un dispositif pour simuler l'estimation d'un délai de réalisation d'images satellitaires associées à au moins une zone prédéterminée de la Terre, par au moins un satellite d'observation de la Terre comprenant un système d'imagerie optique, la zone prédéterminée étant préalablement divisée selon une grille à mailles, l'acquisition étant prévue pour être déclenchée à partir d'une date de commencement d'analyse, le dispositif comprenant:
- une mémoire configurée pour stocker :
- la grille à mailles associée à la zone prédéterminée,
- les caractéristiques orbitales du satellite à une date courante d'itération, la date courante d'itération correspondant à une date autour de la date de commencement d'analyse au cours d'une année antérieure à l'année associée à la date de commencement d'analyse, et
- au moins une première valeur de nébulosité pour chacune des mailles de la grille, la première valeur de nébulosité correspondant à une observation et/ou une prévision météorologique, respectivement observée à la date courante d'itération ou réalisée pour la date courante d'itération,
- un processeur couplé à la mémoire et configuré pour sélectionner une pluralité de mailles de la grille, prévues pour être survolées par le satellite à la date courante d'itération à partir des caractéristiques orbitales du satellite à la date courante d'itération, de sorte à obtenir des mailles candidates,
le processeur étant en outre configuré pour :
(a) identifier parmi les mailles candidates, à partir d'un plan mission du satellite, celles pour lesquelles est prévu une planification d'acquisition d'au moins une image satellitaire,
(b) identifier parmi les mailles candidates, celles pour lesquelles la première valeur de nébulosité associée est au-delà d'une valeur seuil de validation prédéterminée, de sorte à obtenir des mailles planifiées,
(c) répéter les opérations (a) et (b), une ou plusieurs fois jusqu'à ce que chacune des mailles de ladite grille soit comprises dans les mailles validées, en prenant en considération à chaque itération les mailles non identifiées comme validées et une période suivante de la date courante d'itération considérée dans l'itération précédente,
(d) déterminer le délai de réalisation d'images satellitaires à partir du nombre d'itérations réalisées durant l'opération (c).

De préférence, la mémoire est en outre configurée pour stocker une deuxième valeur de nébulosité pour chacune des mailles candidates, la deuxième valeur de nébulosité correspondant à une observation météorologique et/ou une prévision météorologique, respectivement observée à la date courante d'itération ou réalisée pour la date courante d'itération, et, le processeur est en outre configuré pour identifier parmi les mailles candidates , celles pour lesquelles la deuxième valeur de nébulosité associée est au-delà d'une valeur seuil de sélection prédéterminée différente de la valeur seuil de validation prédéterminée, de sorte à obtenir les mailles candidates.

La valeur seuil de sélection prédéterminée et la valeur seuil de validation prédéterminée peuvent préférentiellement correspondre à une valeur seuil de pourcentage de ciel clair. De préférence, la valeur seuil de validation est plus grande que la valeur seuil de sélection.

De préférence, le processeur est en outre configuré pour déterminer, au cours de l'opération (d), au moins une grandeur statistique et/ou au moins une probabilité à postériori à partir d'une pluralité de délais de réalisation d'images satellitaires déterminés durant l'opération (c).

### Brève description des dessins

D'autres caractéristiques et avantages de l'invention seront mieux compris à la lecture de la description qui va suivre et en référence aux dessins annexés, donnés à titre illustratif et nullement limitatif.
La figure 1 représente un organigramme selon l'invention.
La figure 2 représente une grille à mailles entourant une portion de la Terre.
La figure 3 représente une vue fonctionnelle schématique d'un dispositif d'estimation selon une mise en œuvre de l'invention.
Les figures 4a, 4b, 4c, 4d et 4e représentent un exemple de mise en œuvre selon l'invention.
La figure 5 représente une distribution du délai de réalisation simulé pour plusieurs années pour un exemple de requête en imagerie satellitaire.

Pour des raisons de clarté, les éléments représentés ne sont pas à l'échelle les uns par rapport aux autres, sauf mention contraire.

### Description des modes de réalisation

Dans le cadre de la description, on entend par système d'observation de la Terre, un système comprenant des constellations satellitaires telles que Landsat, Spot ou encore Pléiades. En outre, il est précisé que l'invention concerne les systèmes satellitaires optiques, pour lesquels l'acquisition d'images de la Terre est dépendante d'un éclairement solaire réfléchi par le sol. Ces systèmes utilisent des capteurs passifs permettant d'enregistrer le rayonnement solaire réfléchi par le sol, dans diverses longueurs d'onde.

Le principe général de l'invention est basé sur le constat que les prévisions météorologiques à long terme ne sont pas très fiables. Il n'est donc pas opportun de se baser sur ces dernières pour estimer le délai nécessaire à la réalisation d'images satellitaires associées à une zone prédéterminée de la Terre. Ainsi, selon l'invention, il est proposé de réaliser une ou plusieurs simulations du processus d'acquisition d'images satellitaires associées à une zone prédéterminée de la Terre. Le processus d'acquisition d'images couvrant la période allant de l'activation d'une requête d'imagerie satellitaire demandée par un client jusqu'à la fourniture des résultats d'imagerie à ce même client. Dans l'invention, il s'agit de réaliser chaque simulation à partir d'observations et/ou prévisions météorologiques passées. De cette manière, il est possible de déterminer le temps qu'il aurait fallu au système d'observation de la Terre pour réaliser des images satellitaires de la zone prédéterminée de la Terre pendant la période passée concernée. Cette quantité de temps déterminée en fonction du passé peut alors servir de base pour estimer le délai futur de réalisation d'images satellitaires.

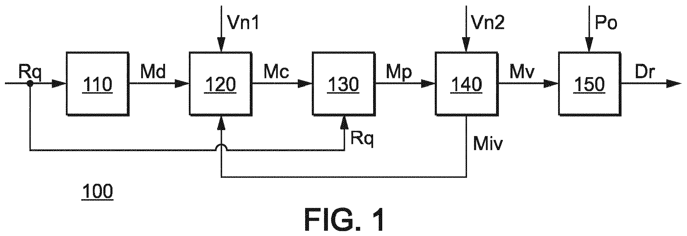

La figure 1 illustre un procédé 100 décrivant fonctionnellement le principe général du simulateur selon l'invention.

Dans l'exemple de la figure 1, on considère que l'on reçoit une requête en imagerie satellitaire Rq similaire aux requêtes qui sont reçues et traitées dans les centres mission pour satellite. Toutefois, il est également envisagé que l'on reçoive plusieurs requêtes Rq concurrentes. Une requête Rq est prévue pour être déclenchée/activée à partir d'une date de commencement d'analyse. On entend par date, l'indication du jour, du mois et de l'année.

La requête Rq définit au moins une zone prédéterminée de la Terre dans laquelle l'acquisition en imagerie satellitaire doit être réalisée. Dans un exemple, la zone prédéterminée de la Terre est définie par un ou plusieurs polygones dont les sommets correspondent à des positions géographiques du globe terrestre. Dans une mise en œuvre particulière, la requête Rq est prévue pour être associée à un système d'observation de la Terre prédéterminé qui est configuré pour survoler la zone prédéterminée de la Terre.

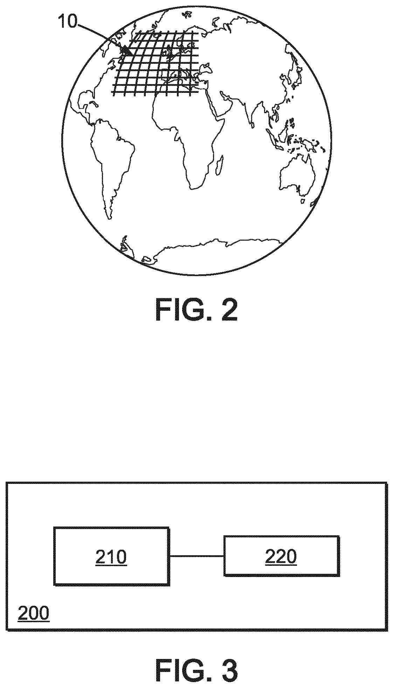

Par la suite, dans l'étape 110, dite de maillage, on divise la zone prédéterminée de Terre selon une grille composée de mailles afin d'obtenir des mailles demandées Md. On entend par grille, par exemple, un quadrillage horizontal et vertical. On entend par maille, l'un quelconque des quadrilatères élémentaires qui composent la grille. Par exemple, chaque maille de la grille présente une forme carrée ou voisine d'un carré, par exemple, une forme rectangulaire. La figure 2 illustre un exemple de grille à mailles 10 superposée à une portion de la Terre. Dans un premier exemple, la grille selon l'invention se présente sous la forme d'un fichier image dans lequel chaque maille associée à la zone prédéterminée est géo-référencée. Dans un deuxième exemple, la grille selon l'invention se présente sous la forme d'un fichier texte dans lequel chaque ligne décrit au moins une maille de la grille avec des informations de géo-référencement associées à la zone prédéterminée.

Dans une étape 120, dite de recensement, on détermine des mailles dites candidates Mc parmi les mailles demandées Md. Pour cela, on utilise, à une date courante d'itération, les caractéristiques orbitales d'au moins un satellite d'observation configuré pour survoler la zone prédéterminée de la Terre, pour déterminer parmi les mailles demandées Md, celles qui seraient survolées par le satellite d'observation à la date courante d'itération.

On entend par caractéristiques orbitales d'un satellite, les caractéristiques conventionnelles telles que l'altitude, le nombre d'orbites par jour ou l'inclinaison de l'orbite. D'autres paramètres du système peuvent également être définis conjointement aux caractéristiques orbitales d'un satellite, comme la liste des stations sols permettant la redescente des images réalisées par le satellite, la résolution du système d'imagerie, les bandes spectrales supportées par le système d'imagerie du satellite, la fauchée de l'instrument optique ou encore les limites d'angle d'incidence autorisées pour la prise de vues.

On entend par date courante d'itération, une date prise en compte pendant une itération d'une simulation du délai de réalisation de la requête Rq. La date courante d'itération est située autour de la date de commencement au cours d'une année antérieure à l'année associée à la date de commencement de la requête Rq. On entend par année antérieure, une année précédant l'année associée à la date de commencement d'analyse de la requête Rq. Par exemple, il peut s'agir de deux, cinq, huit, douze, vingt ou encore trente années avant l'année associée à la date de commencement de la requête Rq. Lors d'une simulation selon l'invention, la date courante d'itération est initialisée à une date d'initialisation de la simulation. La date d'initialisation de la simulation est déterminée à partir de la date de commencement d'analyse de la requête Rq. Dans un exemple, on peut considérer que la date de commencement d'analyse de la requête Rq est prévue pour le dd/mm/YYYY où dd correspond au jour, mm au mois et YYYY l'année concernée. Dans cet exemple, on peut également considérer que l'année antérieure à prendre compte se situe cinq années avant l'année associée à la date de commencement d'analyse de la requête Rq. Dans ce cas, la date d'initialisation de la simulation considérée correspond à la date du dd/mm/(YYYY-5). Ensuite, au cours d'une simulation, la date courante d'itération est incrémentée selon au moins un critère prédéterminé. Dans une alternative de l'exemple, on réalise plusieurs simulations, chaque simulation portant sur une année antérieure donnée. Dans ce cas, si l'on réalise huit simulations portant sur les huit dernières années précédant la date de commencement d'analyse de la requête Rq, alors la date d'initialisation de chaque simulation correspondra respectivement aux dates du dd/mm/(YYYY-1), dd/mm/(YYYY-2), dd/mm/(YYYY-3), dd/mm/(YYYY-4), dd/mm/(YYYY-5), dd/mm/(YYYY-6), dd/mm/(YYYY-7) et dd/mm/(YYYY-8).

Dans une première mise en œuvre particulière de l'étape 120, seules les mailles demandées Md qui sont prévues pour être survolées de jour, peuvent être considérées comme des mailles candidates Mc.

Dans une deuxième mise en œuvre particulière de l'étape 120, seules les mailles demandées Md qui sont prévues pour être survolées tout en étant peu ou pas masquées par des nuages, peuvent être considérées comme des mailles candidates Mc. Pour cela, on associe à chaque maille demandée Md une première valeur de nébulosité Vn1. Ainsi, seules les mailles demandées Md qui sont prévues pour être survolées et dont la première valeur de nébulosité est au-delà d'une valeur seuil de sélection, peuvent être considérées comme des mailles candidates Mc.

Dans un exemple, la valeur seuil de sélection prédéterminée est un seuil de nébulosité telle une valeur seuil de pourcentage de ciel clair.

De manière classique, on entend par nébulosité la part de ciel couvert par tout ou partie des nuages au niveau de chaque maille de la grille 10. Il peut s'agir, par exemple, d'un fichier de données ERA-Interim produit par le CEPMMT (Centre Européen pour les Prévisions Métérologiques à Moyen Terme, ou ECMWF en anglais pour European Centre for Medium-Range Weather Forecasts). Un tel fichier, selon l'invention, peut comprendre une valeur de nébulosité pour chacune des mailles demandées Md, et ce, sur une ou plusieurs dates au sein d'une ou plusieurs années antérieures à l'année associée à la date de commencement d'analyse.

Dans une première mise en œuvre, la première valeur de nébulosité correspond à une observation météorologique observée à la date courante d'itération. Dans un exemple de la première mise en œuvre, l'observation météorologique est réalisée au cours d'une année antérieure à l'année associée à la date de commencement d'analyse, le mois portant le même nom et le jour ayant le même quantième que le mois et le jour de la date de commencement.

Dans une deuxième mise en œuvre, la première valeur de nébulosité correspond à une prévision météorologique réalisée pour la date courante d'itération. Dans un exemple de la deuxième mise en œuvre, la prévision a été réalisée pour la même date que la date de commencement prédéfinie au cours d'au moins une année antérieure à l'année associée à la date de commencement d'analyse.

Dans un exemple de la deuxième mise en œuvre particulière de l'étape 120, on priorise les mailles candidates Mc en fonction d'au moins un critère de priorité prédéterminé. Par exemple, on peut donner une priorité plus élevée aux mailles candidates Mc dont la première valeur de nébulosité Vn1 est faible. Dans un autre exemple, on peut prioriser les mailles candidates Mc selon une valeur de priorité prédéterminée. La valeur de priorité prédéterminée peut être déterminée dans la requête Rq ou dans l'étape 110. On notera qu'il est également envisagé d'utiliser plusieurs critères de priorité prédéterminés de manière combinée ou de manière indépendante.

Dans une étape 130, dite de calcul du plan mission, on détermine des mailles dites planifiées Mp parmi les mailles candidates Mc. Pour cela, on simule, à la date courante d'itération, la génération d'un plan mission du satellite d'observation considéré à partir de mailles candidates Mc et de la requête Rq. Ainsi, seules les mailles candidates Mc qui sont planifiées pour être acquises par le satellite considéré, peuvent être considérées comme des mailles planifiées Mp. On entend par plan mission (en anglais, mission plan), le plan de programmation du satellite considéré qui est téléchargé/envoyé au satellite via le centre de contrôle et qui permet d'effectuer les prises de vue de la zone prédéterminée de la Terre suivant un ordre et des caractéristiques de prise de vue fournies dans le plan. Par exemple, la priorité associée à chaque maille candidate Mc peut être prise en considération pour élaborer le plan mission. Il est connu que le plan mission prend en compte des contraintes cinématiques liées à la plateforme et intègre également les plans de vidages sur les différentes stations de réception. Un tel plan mission peut être obtenu par un générateur de plan mission de type connu, par exemple, comme décrit dans la demande FR3039728. Dans l'invention, il est prévu de prendre en considération la charge du satellite (en anglais, satellite load) dans l'établissement du plan mission. On entend par charge du satellite, une pluralité de requêtes Rq traitées de manière concurrente par le satellite à un moment donné. Dans le cadre d'une simulation, on pourra considérer la charge actuelle et/ou future du satellite d'observation de la Terre concerné.

Dans une étape 140, dite de validation, on simule la validation des images acquises une fois téléchargées au sol. Pour cela, on détermine, à la date courante d'itération, des mailles dites validées Mv parmi les mailles planifiées Mp. En pratique, seules les mailles planifiées Mp qui n'ont pas été masquées par des nuages, peuvent être considérées comme des mailles validées Mv. Pour cela, on associe à chaque maille planifiée Mp, une deuxième valeur de nébulosité Vn2. Ainsi, seules les mailles planifiées Mp dont la deuxième valeur de nébulosité est au-delà d'une valeur seuil de validation, peuvent être considérées comme des mailles validées Mv. Dans un exemple, la valeur seuil de validation prédéterminée est une valeur seuil de pourcentage de ciel clair. Par exemple, une valeur seuil de pourcentage de ciel clair compris entre 50 % et 100% peut être envisagée, plus de préférence entre 60% et 90%. Dans une mise en œuvre particulière, la valeur seuil de validation prédéterminée est plus grande que la valeur seuil de sélection prédéterminée.

Les mailles invalidées MiV dans l'étape 140 sont réintroduites dans une boucle d'itération formée par les étapes 120, 130 et 140, jusqu'à ce que chacune des mailles demandées Md soit comprise dans l'ensemble des mailles validées Mv. Pour cela, à chaque itération de la simulation, on prend en considération une période suivante de la date courante d'itération considérée dans l'itération précédente. Dans un exemple, la période suivante de date courante d'itération considérée dans l'itération précédente correspond au jour suivant de la date courante d'itération considérée dans l'itération précédente. Toutefois, d'autres périodes peuvent être envisagées comme par exemple, une période prédéterminée jusqu'à l'orbite suivante du satellite, un ou plusieurs jours, semaines, mois ou toute autre durée appropriée.

Enfin, dans une étape 150, pour une simulation arrivée à complétion après une ou plusieurs itérations, on détermine le délai Dr nécessaire à la réalisation d'images satellitaires à partir du nombre d'itérations réalisées pendant la simulation. Dans un exemple, il s'agit, au moins, de la période écoulée entre la date d'initialisation de la simulation considérée jusqu'à la date de complétion de la simulation considérée. Dans cet exemple, on peut également ajouter d'autres périodes opérationnelles Po, telles que la période nécessaire à la préparation et la fourniture des résultats d'imagerie au client. Cela peut notamment comprendre des opérations de traitement d'images selon les souhaits du client.

L'exemple de la figure 3 illustre une mise en œuvre particulière du procédé 100 de la figure 1. La figure 3 montre un dispositif 200 pour simuler l'estimation du délai de réalisation d'images satellitaires associées à une zone prédéterminée de la Terre. Le dispositif 200 comprend un processeur 210 et une mémoire 220 qui sont mutuellement couplés.

La mémoire 220 est configurée pour stocker une grille associée à la zone prédéterminée de la Terre définie dans la requête Rq. Dans une mise en oeuvre particulière, la mémoire 220 est configurée pour stocker une pluralité de grilles, chacune étant associée à une zone prédéterminée de la Terre définie dans la requête Rq. Dans une autre mise en oeuvre particulière, la mémoire 220 est configurée pour stocker une grille associée à une pluralité de zones prédéterminées de la Terre définies dans la requête Rq. En outre, la mémoire 220 est également configurée pour stocker les caractéristiques orbitales d'au moins un satellite d'observation configuré pour survoler la zone prédéterminée de la Terre, et ce, au moins à la date courante d'itération de la simulation. Enfin, la mémoire 220 est configurée pour stocker la première valeur de nébulosité Vn1 et la deuxième valeur de nébulosité Vn2 pour chacune des mailles demandées Md.

Le processeur 210 est configuré pour mettre en œuvre les étapes 110, 120, 130, 140 et 150 du procédé 100 selon les données météorologiques à disposition. De manière générale, l'invention est prévue pour utiliser une observation météorologique observée à la date courante d'itération et/ou une prévision météorologique réalisée pour la date courante d'itération

Dans une première mise en œuvre, on dispose seulement des prévisions météorologiques passées. Dans ce cas, le processeur 210 est configuré pour utiliser les prévisions météorologiques passées dans l'étape 120.

Dans une deuxième mise en œuvre, on dispose seulement des observations météorologiques passées. Dans ce cas, le processeur 210 est, configuré, soit, pour utiliser les observations météorologiques passées dans les étapes 120, et 140, soit, pour utiliser les observations météorologiques passées dans l'étape 140.

Dans une troisième mise en œuvre, on dispose des observations et des prévisions météorologiques passées. Dans ce cas, le processeur 210 est configuré pour utiliser les prévisions météorologiques passées dans l'étape 120 et utiliser les observations météorologiques dans l'étape 140.

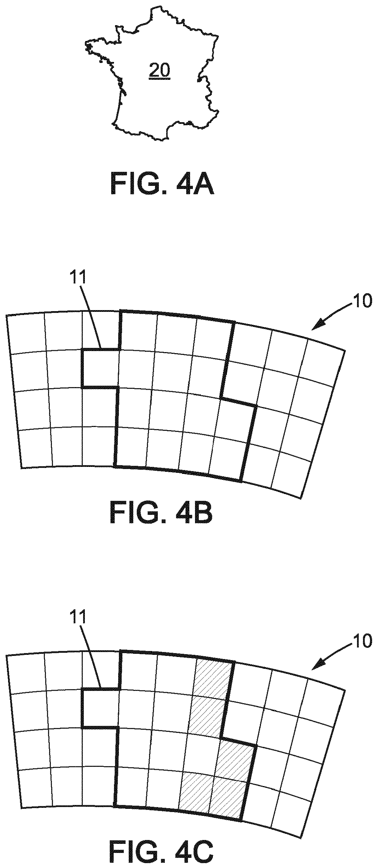

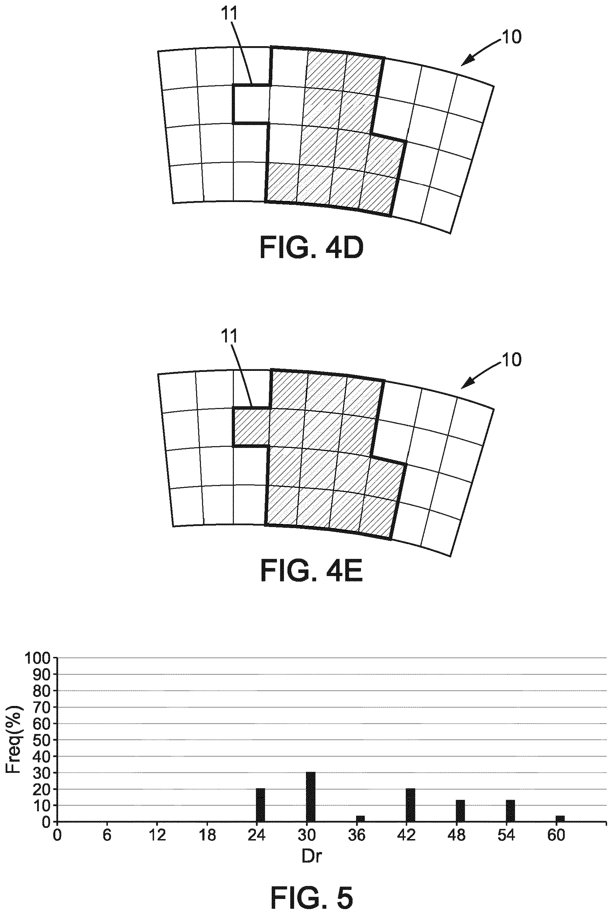

Afin de mieux comprendre le fonctionnement du dispositif 200, considérons l'exemple d'une simulation en lien avec les figures 4a, 4b, 4c, 4d et 4e. Dans cet exemple, le processeur 210 est configuré selon la deuxième alternative de la deuxième mise en oeuvre, telle que décrite ci-dessus. En pratique, on ne dispose que des observations météorologiques passées qui sont utilisées par le processeur 210 dans la mise en oeuvre de l'étape 140.

Tout d'abord, on suppose que l'on reçoit, au niveau d'un centre de mission pour satellite, un fichier comprenant une requête d'imagerie satellitaire Rq associée à une zone prédéterminée de la Terre. La figure 4a, en lien avec la figure 3 présentée plus haut, illustre une zone prédéterminée 20 définie par la requête Rq. Ensuite, on suppose aussi que la date de commencement d'analyse de la requête Rq est prévue pour le dd/mm/YYYY où dd correspond au jour, mm au mois et YYYY l'année concernée. On suppose également que la mémoire 220 stocke les caractéristiques orbitales d'au moins un satellite d'observation configuré pour survoler la zone prédéterminée de la Terre 20, et ce, à chaque date courante d'itération de la simulation. Enfin, on suppose que la mémoire 220 stocke une deuxième valeur de nébulosité Vn2 pour chaque maille demandée Md par la requête Rq. On considère aussi dans l'exemple, que la deuxième valeur de nébulosité Vn2 a été observée à la date du dd/mm/(YYYY - T) ou T correspond à un nombre entier. Dans l'exemple, on considère que T prend la valeur 10, de sorte que la mémoire 220 stocke au moins une deuxième valeur de nébulosité Vn2 observée dix ans avant la date de commencement d'analyse du dd/mm/YYYY, c'est-à-dire à la date du dd/mm/(YYYY-10). Ainsi, la date d'initialisation de la simulation est le dd/mm/(YYYY-10).

En opération, le processeur 210 met d'abord en œuvre l'étape 110 afin d'obtenir les mailles demandées Md. La figure 4b délimite par un trait gras 11 l'ensemble des mailles demandées Md qui sont issues du découpage de la zone prédéterminée 20.

Par la suite, comme indiqué plus haut, le processeur 210 met en oeuvre l'étape 120 afin d'obtenir les mailles candidates Mc. Il s'agit alors d'identifier parmi les mailles demandées Md, celles qui seraient survolées par le satellite d'observation à la date courante d'itération.

Ensuite, le processeur 210 met en œuvre l'étape 130 afin d'obtenir les mailles planifiées Mp. Il s'agit alors d'obtenir les mailles de la grille 11 qui sont prévues pour être acquises par le satellite d'observation à la date du dd/mm/(YYYY-10).

Par la suite, le processeur 210 met en œuvre l'étape 140 afin d'obtenir les mailles validées Mv. Il s'agit alors d'identifier parmi les mailles planifiées celles pour lesquelles la deuxième valeur de nébulosité Vn2 est au-delà d'une valeur seuil de validation prédéterminée. La figure 4c illustre par des hachures les mailles de la grille 11 qui auraient été validées à la date du dd/mm/(YYYY - 10).

Selon la figure 4c, seulement une partie des mailles de la grille 11 auraient été validées à la date du dd/mm/(YYYY - 10), de sorte que le processeur 210 a besoin de poursuivre la simulation à partir des mailles invalidées Miv lors de la mise en œuvre de l'étape 140 par le processeur 210. Pour cela, le processeur 210 met en œuvre une boucle d'itération des étapes 120, 130, 140, 150.

Toutefois, dans l'invention, lors de l'exécution d'une itération ultérieure de la simulation, le processeur 210 est configuré pour prendre en considération la période suivante de la date courante d'itération considérée dans l'itération précédente.

Dans l'exemple de la figure 4, le processeur 210 prend en considération le jour suivant de la date courante d'itération considérée dans l'itération précédente. Ainsi, lors de la deuxième itération, le processeur 210 sélectionne à la date du (dd + 1)/mm/(YYYY-10), les mailles planifiées Mp parmi les mailles invalidées Miv. Puis, le processeur 210 identifie parmi les mailles planifiées Mp celles pour lesquelles la deuxième valeur de nébulosité associée, à la date du (dd+1)/mm/(YYYY - 10), est au-delà de la valeur seuil de validation prédéterminée.

La figure 4d illustre par des hachures les mailles qui auraient été validées à la date du (dd+1)/mm/(YYYY ― 10). Selon la figure 4d, seulement une partie des mailles de la grille 11 auraient été validées à la date du (dd+1)/mm/(YYYY - 10), de sorte que le processeur 210 a besoin de poursuivre la simulation. Ainsi, dans l'exemple de la figure 4, pour la troisième itération de la simulation, le processeur 210 prend en considération la date courante d'itération du (dd+2)/mm/(YYYY - 10). De même, pour la quatrième itération de la simulation, le processeur 210 prend en considération la date courante d'itération du (dd+3)/mm/(YYYY - 10). Et ainsi de suite jusqu'à la complétion de la simulation courante, c'est-à-dire, jusqu'à ce que chacune des mailles demandées Md soit comprise dans les mailles validées Mv.

La figure 4e illustre par des hachures les mailles qui auraient été validées au terme de la complétion d'une simulation.

Lorsque l'ensemble des mailles demandées Md est compris dans les mailles validées, le processeur 210 met en œuvre l'étape 150 afin d'estimer le délai de réalisation de la requête Rq pour l'année passée considérée.

Dans un exemple, le délai de réalisation de la requête Rq correspond au moins à la période écoulée depuis la date d'initialisation de la simulation du dd/mm/(YYYY - T) jusqu'à la date à laquelle l'ensemble des mailles auraient été validées. Par exemple, si T est égal à 10 comme dans l'exemple ci-dessus et que la date complétion de la simulation est le (dd+5)/mm/(YYYY - 10), alors le délai de réalisation d'images satellitaires est de six jours. Dans un autre exemple, si T est égal à 10 comme dans l'exemple ci-dessus et que la date complétion de la simulation est le (dd+3)/(mm+2)/(YYYY - 10), alors le délai de réalisation d'images satellitaires est de deux mois et quatre jours. On peut ajouter à ce délai d'autres délais opérationnels tels que ceux nécessaires pour réaliser des opérations de traitement d'images, pour télécharger le plan mission du centre mission vers le satellite ou encore pour téléchargement les images acquises par le satellite d'observation vers les stations au sol.

De manière particulière, il est envisagé de réaliser une simulation pour chacune des années antérieures à l'année associée à la date de commencement d'analyse. Dans l'exemple de la figure 4, il pourrait s'agir de réaliser une simulation pour chacune des dix années antérieures à l'année de la date de commencement de la requête Rq. Dans une mise en œuvre particulière, le processeur 210 est configuré pour réaliser, en parallèle, une pluralité de simulations.

Dans le cas de figure où plusieurs simulations sont réalisées, le processeur 210 est en outre configuré pour déterminer au moins une grandeur statistique et/ou au moins une probabilité à postériori à partir des délais de réalisation obtenus au cours de chacune des années simulées.

Dans un exemple, la grandeur statistique inclut le calcul de l'une des grandeurs suivantes, prises isolément ou suivant toute combinaison possible : une moyenne, une moyenne pondérée, une médiane, un nombre d'occurrences au-dessus ou au-dessous d'une valeur de référence, un maximum, un minimum, un écart-type ou l'écart entre un maximum et un minimum.

Dans un autre exemple, la probabilité à postériori est déterminée sur la base de la grandeur statistique ou d'une série de grandeurs statistiques. Ainsi, par exemple, il est possible d'estimer la probabilité d'acquérir les images satellitaires associées à une requête d'imagerie, pour un ou plusieurs délais de réalisation donnés. Dans un autre exemple, on peut déterminer les délais de réalisation d'une requête d'imagerie pour lesquels la probabilité à postériori est supérieure à un seuil de détermination de délai de réalisation prédéterminé. La figure 5 illustre sous la forme d'un histogramme, une distribution du délai de réalisation associé à une requête Rq, et ce, selon une pluralité d'années simulées. L'histogramme de la figure 5 comprend en abscisse le délai de réalisation Dr exprimée en jours et comprend en ordonnée la fréquence d'occurrence des délais de réalisation, exprimée en pourcentage. Ainsi, dans la figure 5, on peut voir que la probabilité de réaliser la requête Rq en trente jours est plus importante que la probabilité de la réaliser en soixante jours. Dans l'exemple de la figure 5, un seuil de détermination de délai de réalisation fixé à 20% permet d'identifier le délai de trente jours comme étant le plus probable pour la réalisation de la requête Rq.

En outre, il est également envisagé de réaliser une simulation seulement pour les années antérieures à l'année associée à la date de commencement qui ont des similitudes météorologiques avec l'année associée à la date de commencement. Par exemple, il est connu que des phénomènes climatiques tels qu' El Niño ou La Niña sont caractérisés par une chronologie particulière qui peut être prévue grâce à un couplage de l'atmosphère et de l'océan de surface.

Dans les revendications, le terme "comporter" n'exclut pas d'autres éléments ou d'autres étapes. Les différentes caractéristiques présentées et/ou revendiquées peuvent être avantageusement combinées. Leur présence dans la description ou dans des revendications dépendantes différentes n'exclut pas cette possibilité. Enfin, les signes de référence aux dessins ne sauraient être compris comme limitant la portée de l'invention.

## Revendications

1. Procédé (100) pour simuler l'estimation d'un délai de réalisation d'images satellitaires associées à au moins une zone prédéterminée de la Terre (20), par au moins un satellite d'observation de la Terre comprenant un système d'imagerie optique, la zone prédéterminée étant préalablement divisée (110) selon une grille à mailles (11), l'acquisition étant prévue pour être déclenchée à partir d'une date de commencement d'analyse,
**caractérisé en ce que** le procédé comprend les étapes consistant à :
(a) sélectionner (120) une pluralité de mailles de la grille, prévues pour être survolées par le satellite à une date courante d'itération, à partir des caractéristiques orbitales du satellite à la date courante d'itération, de sorte à obtenir des mailles candidates, la date courante d'itération correspondant à une date autour de la date de commencement d'analyse au cours d'une année antérieure à l'année associée à la date de commencement d'analyse,
(b) identifier (130) parmi les mailles candidates, à partir d'un plan mission du satellite, celles pour lesquelles est prévue une planification d'acquisition d'au moins une image satellitaire, de sorte à obtenir des mailles planifiées,
(c) obtenir (140) au moins une première valeur de nébulosité pour chacune des mailles planifiées, la première valeur de nébulosité correspondant à une observation et/ou une prévision météorologique, respectivement observée à la date courante d'itération ou réalisée pour la date courante d'itération,
(d) identifier (140) parmi les mailles planifiées, celles pour lesquelles la première valeur de nébulosité associée est au-delà d'une valeur seuil de validation prédéterminée, de sorte à obtenir des mailles validées,
(e) répéter les étapes (a) à (d), une ou plusieurs fois jusqu'à ce que chacune des mailles de ladite grille soit comprise dans les mailles validées, en prenant en considération à chaque itération les mailles non identifiées comme validées et une période suivante de la date courante d'itération considérée dans l'itération précédente,
(f) déterminer (150) le délai de réalisation d'images satellitaires à partir du nombre d'itérations réalisées à l'étape (e).

2. Procédé selon la revendication 1, dans lequel,
- l'étape (a) comprend en outre les étapes consistant à :
- obtenir (120) au moins une deuxième valeur de nébulosité pour chacune des mailles candidates, la deuxième valeur de nébulosité correspondant à une observation météorologique et/ou une prévision météorologique, respectivement observée à la date courante d'itération ou réalisée pour la date courante d'itération, et,
- identifier (120) parmi les mailles candidates, celles pour lesquelles la deuxième valeur de nébulosité associée est au-delà d'une valeur seuil de sélection prédéterminée différente de la valeur seuil de validation prédéterminée.

3. Procédé selon la revendication 2, dans lequel la valeur seuil de sélection prédéterminée et la valeur seuil de validation prédéterminée correspondent à une valeur seuil de pourcentage de ciel clair.

4. Procédé selon la revendication 3, dans lequel la valeur seuil de validation prédéterminée est plus grande que la valeur seuil de sélection prédéterminée.

5. Procédé selon les revendications précédentes, dans lequel l'étape (f) comprend en outre l'étape consistant à déterminer au moins une grandeur statistique et/ou au moins une probabilité à postériori à partir d'une pluralité de délais de réalisation d'images satellitaires déterminés à l'étape (d).

6. Produit programme d'ordinateur, qui, lorsqu'il est exécuté par un ordinateur, est agencé de façon à exécuter un procédé selon une quelconque des revendications précédentes ; le programme informatique étant, en option, stocké sur un support lisible par ordinateur.

7. Dispositif (200) pour simuler l'estimation d'un délai de réalisation d'images satellitaires associées à au moins une zone prédéterminée de la Terre (20), par au moins un satellite d'observation de la Terre comprenant un système d'imagerie optique, la zone prédéterminée étant préalablement divisée selon une grille à mailles (11), l'acquisition étant prévue pour être déclenchée à partir d'une date de commencement d'analyse,
**caractérisé en ce que** le dispositif comprend:
- une mémoire (210) configurée pour stocker :
- la grille à mailles associée à la zone prédéterminée,
- les caractéristiques orbitales du satellite à une date courante d'itération, la date courante d'itération correspondant à une date autour de la date de commencement d'analyse au cours d'une année antérieure à l'année associée à la date de commencement d'analyse, et
- au moins une première valeur de nébulosité pour chacune des mailles de la grille, la première valeur de nébulosité correspondant à une observation et/ou une prévision météorologique, respectivement observée à la date courante d'itération ou réalisée pour la date courante d'itération,
- un processeur (220) couplé à la mémoire et configuré pour sélectionner une pluralité de mailles de la grille, prévues pour être survolées par le satellite à la date courante d'itération à partir des caractéristiques orbitales du satellite à la date courante d'itération, de sorte à obtenir des mailles candidates,
le processeur étant en outre configuré pour :
(a) identifier parmi les mailles candidates, à partir d'un plan mission du satellite, celles pour lesquelles est prévu une planification d'acquisition d'au moins une image satellitaire,
(b) identifier parmi les mailles candidates, celles pour lesquelles la première valeur de nébulosité associée est au-delà d'une valeur seuil de validation prédéterminée, de sorte à obtenir des mailles planifiées,
(c) répéter les opérations (a) et (b), une ou plusieurs fois jusqu'à ce que chacune des mailles de ladite grille soit comprise dans les mailles validées, en prenant en considération à chaque itération les mailles non identifiées comme validées et une période suivante de la date courante d'itération considérée dans l'itération précédente,
(d) déterminer le délai de réalisation d'images satellitaires à partir du nombre d'itérations réalisées durant l'opération (c).

8. Dispositif selon la revendication 7, dans lequel :
- la mémoire (210) est en outre configurée pour stocker une deuxième valeur de nébulosité pour chacune des mailles candidates, la deuxième valeur de nébulosité correspondant à une observation météorologique et/ou une prévision météorologique, respectivement observée à la date courante d'itération ou réalisée pour la date courante d'itération, et,
- le processeur (220) est en outre configuré pour identifier parmi les mailles candidates , celles pour lesquelles la deuxième valeur de nébulosité associée est au-delà d'une valeur seuil de sélection prédéterminée différente de la valeur seuil de validation prédéterminée, de sorte à obtenir les mailles candidates.

9. Dispositif selon la revendication 8, dans lequel la valeur seuil de sélection prédéterminée et la valeur seuil de validation prédéterminée correspondent à une valeur seuil de pourcentage de ciel clair.

10. Dispositif selon la revendication 9, dans lequel la valeur seuil de validation prédéterminée est plus grande que la valeur seuil de sélection prédéterminée.

11. Dispositif selon l'une des revendications 7 à 10, dans lequel le processeur est en outre configuré pour déterminer, au cours de l'opération (d), au moins une grandeur statistique et/ou au moins une probabilité à postériori à partir d'une pluralité de délais de réalisation d'images satellitaires déterminés durant l'opération (c).

## Patentansprüche

1. Verfahren (100) zur Simulation der Schätzung einer Zeitspanne zur Erstellung von Satellitenbildern, die mindestens einem vorbestimmten Bereich der Erde (20) zugeordnet sind, durch mindestens einen Satelliten zur Beobachtung der Erde, der ein optisches Bildgebungssystem umfasst, wobei der vorbestimmte Bereich zuvor in ein Maschengitter (11) aufgeteilt (110) wird, wobei die Erfassung dafür vorgesehen ist, ausgehend von einem Analyseanfangsdatum ausgelöst zu werden,
**dadurch gekennzeichnet, dass** das Verfahren die folgenden Schritte umfasst:
(a) Auswählen (120) einer Mehrzahl von Maschen des Gitters, die dafür vorgesehen sind, vom Satelliten an einem aktuellen Durchlaufdatum überflogen zu werden, anhand der Orbitalcharakteristika des Satelliten am aktuellen Durchlaufdatum, um Kandidatenmaschen zu erhalten, wobei das aktuelle Durchlaufdatum einem Datum um das Analyseanfangsdatum herum im Verlauf eines Jahrs vor dem Jahr, das dem Analyseanfangsdatum zugeordnet ist, entspricht,
(b) Identifizieren (130) derjenigen aus den Kandidatenmaschen anhand eines Einsatzplans des Satelliten, für welche eine Planung zur Erfassung mindestens eines Satellitenbilds vorgesehen ist, um geplante Maschen zu erhalten,
(c) Erhalten (140) mindestens eines ersten Bewölkungswerts für jede der geplanten Maschen, wobei der erste Bewölkungswert einer meteorologischen Beobachtung und/oder Vorhersage entspricht, die am aktuellen Durchlaufdatum beobachtet bzw. für das aktuelle Durchlaufdatum vorgenommen wird,
(d) Identifizieren (140) derjenigen aus den geplanten Maschen, für welche der erste zugeordnete Bewölkungswert über einem vorbestimmten Validierungsschwellenwert liegt, um validierte Maschen zu erhalten,
(e) Wiederholen der Schritte (a) bis (d) ein oder mehrere Male, bis jede der Maschen des Gitters in den validierten Maschen enthalten ist, unter Berücksichtigung, bei jedem Durchlauf, der nicht identifizierten Maschen als validiert und eines folgenden Zeitraums des aktuellen Durchlaufdatums, der im vorhergehenden Durchlauf berücksichtigt ist,
(f) Bestimmen (150) der Zeitspanne zur Erstellung von Satellitenbildern anhand der Anzahl von Durchläufen, die bei Schritt (e) vorgenommen werden.

2. Verfahren nach Anspruch 1, wobei
- der Schritt (a) ferner die folgenden Schritte umfasst:
- Erhalten (120) mindestens eines zweiten Bewölkungswerts für jede der Kandidatenmaschen, wobei der zweite Bewölkungswert einer meteorologischen Beobachtung und/oder einer meteorologischen Vorhersage entspricht, die am aktuellen Durchlaufdatum beobachtet bzw. für das aktuelle Durchlaufdatum vorgenommen wird, und
- Identifizieren (120) derjenigen aus den Kandidatenmaschen, für welche der zweite zugeordnete Bewölkungswert über einem vorbestimmten Auswahlschwellenwert liegt, der vom vorbestimmten Validierungsschwellenwert verschieden ist.

3. Verfahren nach Anspruch 2, wobei der vorbestimmte Auswahlschwellenwert und der vorbestimmte Validierungsschwellenwert einer einzelnen Prozentsatzschwelle für klaren Himmel entsprechen.

4. Verfahren nach Anspruch 3, wobei der vorbestimmte Validierungsschwellenwert größer als der vorbestimmte Auswahlschwellenwert ist.

5. Verfahren nach den vorhergehenden Ansprüchen, wobei der Schritt (f) ferner den Schritt des Bestimmens mindestens einer statistischen Größe und/oder mindestens einer Wahrscheinlichkeit a posteriori anhand einer Mehrzahl von Zeitspannen zur Erstellung von Satellitenbildern, die bei Schritt (d) bestimmt werden, umfasst.

6. Computerprogrammprodukt, das bei Ausführung durch einen Computer so angeordnet ist, dass es ein Verfahren nach einem der vorhergehenden Ansprüche ausführt; wobei das Computerprogramm wahlweise auf einem computerlesbaren Datenträger gespeichert ist.

7. Vorrichtung (200) zur Simulation der Schätzung einer Zeitspanne zur Erstellung von Satellitenbildern, die mindestens einem vorbestimmten Bereich der Erde (20) zugeordnet sind, durch mindestens einen Satelliten zur Beobachtung der Erde, der ein optisches Bildgebungssystem umfasst, wobei der vorbestimmte Bereich zuvor in ein Maschengitter (11) aufgeteilt wird, wobei die Erfassung dafür vorgesehen ist, ausgehend von einem Analyseanfangsdatum ausgelöst zu werden, **dadurch gekennzeichnet, dass** die Vorrichtung Folgendes umfasst:
- einen Speicher (210), der dazu ausgebildet ist, Folgendes zu speichern:
- das Maschengitter, das dem vorbestimmten Bereich zugeordnet ist,
- die Orbitalcharakteristika des Satelliten an einem aktuellen Durchlaufdatum, wobei das aktuelle Durchlaufdatum einem Datum um das Analyseanfangsdatum herum im Verlauf eines Jahrs vor dem Jahr, das dem Analyseanfangsdatum zugeordnet ist, entspricht, und
- mindestens einen ersten Bewölkungswert für jede der Maschen des Gitters, wobei der erste Bewölkungswert einer meteorologischen Beobachtung und/oder Vorhersage entspricht, die am aktuellen Durchlaufdatum beobachtet bzw. für das aktuelle Durchlaufdatum vorgenommen wird,
- einen Prozessor (220), der an den Speicher gekoppelt ist und dazu ausgebildet ist, eine Mehrzahl von Maschen des Gitters, die dafür vorgesehen sind, vom Satelliten am aktuellen Durchlaufdatum überflogen zu werden, anhand der Orbitalcharakteristika des Satelliten am aktuellen Durchlaufdatum auszuwählen, um Kandidatenmaschen zu erhalten,
wobei der Prozessor ferner dazu ausgebildet ist:
(a) aus den Kandidatenmaschen anhand eines Einsatzplans des Satelliten, diejenigen zu identifizieren, für welche eine Planung zur Erfassung mindestens eines Satellitenbilds vorgesehen ist,
(b) aus den Kandidatenmaschen diejenigen zu identifizieren, für welche der erste zugeordnete Bewölkungswert über einem vorbestimmten Validierungsschwellenwert liegt, um geplante Maschen zu erhalten,
(c) die Schritte (a) bis (b) ein oder mehrere Male zu wiederholen, bis jede der Maschen des Gitters in den validierten Maschen enthalten ist, unter Berücksichtigung, bei jedem Durchlauf, der nicht identifizierten Maschen als validiert und eines folgenden Zeitraums des aktuellen Durchlaufdatums, der im vorhergehenden Durchlauf berücksichtigt ist,
(d) die Zeitspanne zur Erstellung von Satellitenbildern anhand der Anzahl von Durchläufen zu bestimmen, die während des Vorgangs (c) vorgenommen werden.

8. Vorrichtung nach Anspruch 7, wobei:
- der Speicher (210) ferner dazu ausgebildet ist, einen zweiten Bewölkungswert für jede der Kandidatenmaschen zu speichern, wobei der zweite Bewölkungswert einer meteorologischen Beobachtung und/oder Vorhersage entspricht, die am aktuellen Durchlaufdatum beobachtet bzw. für das aktuelle Durchlaufdatum vorgenommen wird, und
- der Prozessor (220) ferner dazu ausgebildet ist, aus den Kandidatenmaschen diejenigen zu identifizieren, für welche der zweite zugeordnete Bewölkungswert über einem vorbestimmten Auswahlschwellenwert liegt, der vom vorbestimmten Validierungsschwellenwert verschieden ist, um die Kandidatenmaschen zu erhalten.

9. Vorrichtung nach Anspruch 8, wobei der vorbestimmte Auswahlschwellenwert und der vorbestimmte Validierungsschwellenwert einer einzelnen Prozentsatzschwelle für klaren Himmel entsprechen.

10. Vorrichtung nach Anspruch 9, wobei der vorbestimmte Validierungsschwellenwert größer als der vorbestimmte Auswahlschwellenwert ist.

11. Vorrichtung nach einem der Ansprüche 7 bis 10, wobei der Prozessor ferner dazu ausgebildet ist, im Verlauf des Vorgangs (d) mindestens eine statistische Größe und/oder mindestens eine Wahrscheinlichkeit a posteriori anhand einer Mehrzahl von Zeitspannen zur Erstellung von Satellitenbildern zu bestimmen, die während des Vorgangs (c) bestimmt werden.

## Claims

1. Method (100) for simulating the estimation of a time to acquire satellite images associated with at least one predetermined area of the Earth (20), by at least one Earth observation satellite comprising an optical imaging system, the predetermined area being previously divided (110) into a grid (11) of cells, the acquisition being scheduled to be triggered starting on an analysis start date, **characterized in that** the method comprises the steps of:
(a) selecting (120) a plurality of cells of the grid which are planned to be overflown by the satellite on a current iteration date, based on the orbital characteristics of the satellite on the current iteration date, so as to obtain candidate cells, the current iteration date corresponding to a date around the analysis start date within the course of a year prior to the year associated with the analysis start date,
(b) identifying (130) among the candidate cells, based on a mission plan of the satellite, those for which acquisition of at least one satellite image is scheduled, thus obtaining scheduled cells,
(c) obtaining (140) at least a first cloudiness value for each of the scheduled cells, the first cloudiness value corresponding to a weather observation and/or forecast respectively observed on the current iteration date or predicted for the current iteration date,
(d) identifying (140), among the scheduled cells, those for which the first associated cloudiness value is above a predetermined validation threshold value, thus obtaining validated cells,
(e) repeating steps (a) to (d) one or more times until each of the cells of said grid is comprised in the validated cells, taking into consideration in each iteration the cells not identified as validated and a period following the current iteration date considered in the previous iteration,
(f) determining (150) the time to acquire satellite images, based on the number of iterations carried out in step (e).

2. Method according to claim 1, wherein:
- step (a) further comprises the steps of:
- obtaining (120) at least a second cloudiness value for each of the candidate cells, the second cloudiness value corresponding to a weather observation and/or a weather forecast respectively observed on the current iteration date or predicted for the current iteration date, and,
- identifying (120), among the candidate cells, those for which the associated second cloudiness value is above a predetermined selection threshold value that is different from the predetermined validation threshold value.

3. Method according to claim 2, wherein the predetermined selection threshold value and the predetermined validation threshold value correspond to a clear sky percentage threshold value.

4. Method according to claim 3, wherein the predetermined validation threshold value is greater than the predetermined selection threshold value.

5. Method according to the preceding claims, wherein step (f) further comprises the step of determining at least one statistical quantity and/or at least one posterior probability based on a plurality of times to acquire satellite images determined in step (d).

6. Computer program product which, when executed by a computer, is arranged to execute a method according to any one of the preceding claims; the computer program optionally being stored on a computer-readable medium.

7. Device (200) for simulating the estimation of a time to acquire satellite images associated with at least one predetermined area of the Earth (20), by at least one Earth observation satellite comprising an optical imaging system, the predetermined area being previously divided into a grid (11) of cells, the acquisition being scheduled to be triggered starting on an analysis start date, **characterized in that** the device comprises:
- a memory (210) configured to store:
- the grid of cells associated with the predetermined area,
- the orbital characteristics of the satellite at a current iteration date, the current iteration date corresponding to a date around the analysis start date in a year prior to the year associated with the analysis start date, and
- at least a first cloudiness value for each of the cells of the grid, the first cloudiness value corresponding to a weather observation and/or forecast respectively observed on the current iteration date or predicted for the current iteration date,
- a processor (220) coupled to the memory and configured to select a plurality of cells of the grid that are planned to be overflown by the satellite on the current iteration date based on the orbital characteristics of the satellite on the current iteration date, thus obtaining candidate cells,
the processor being further configured for:
(a) identifying among the candidate cells, based on a mission plan of the satellite, those for which acquisition of at least one satellite image is scheduled,
(b) identifying among the candidate cells, those for which the first associated cloudiness value is above a predetermined validation threshold value, thus obtaining scheduled cells,
(c) repeating operations (a) and (b) one or more times until each of the cells of said grid is comprised in the validated cells, taking into consideration in each iteration the cells not identified as validated and a period following the current iteration date considered in the previous iteration,
(d) determining the time to acquire satellite images based on the number of iterations carried out during operation (c).

8. Device according to claim 7, wherein:
- the memory (210) is further configured to store a second cloudiness value for each of the candidate cells, the second cloudiness value corresponding to a weather observation and/or a weather forecast respectively observed on the current iteration date or predicted for the current iteration date, and,
- the processor (220) is further configured to identify, among the candidate cells, those for which the second associated cloudiness value is above a predetermined selection threshold value that is different from the predetermined validation threshold value, thus obtaining the candidate cells.

9. Device according to the claim 8, werein the predetermined selection threshold value and the predetermined validation threshold value correspond to a clear sky percentage threshold value.

10. Device according to claim 9, wherein the predetermined validation threshold value is greater than the predetermined selection threshold value.

11. Device according to one of claims 7 to 10, wherein the processor is further configured to determine, during operation (d), at least one statistical quantity and/or at least one posterior probability based on a plurality of times to acquire satellite images that are determined during operation (c).
